# EUROPEAN PATENT APPLICATION

(11) **EP 4 742 476 A1**
(43) Date of publication of application: **13.05.2026**
(21) Application number: 24383236.7
(22) Date of filing: 12.11.2024
(51) Int. Cl.: H02J 1/08, B64D 41/00, H02J 3/00

(54) **ELECTRIC POWER GENERATION SYSTEM FOR AN AIRCRAFT**

(71) Applicant: Airbus Operations, S.L.U., 28906 Getafe (Madrid) (ES)
(72) Inventor: DE BROUWER, Gabrielle Josephine Christiane, E-28906 Getafe, Madrid (ES)
(74) Representative: ABG Intellectual Property Law, S.L.

(57) **Abstract**

The present invention belongs to the field of aircraft and, in particular, relates to an electric power generation system for an aircraft and its emergency power solutions. The present invention also relates to an electric power network comprising said electric power generation system, and an aircraft comprising the electric power generation system.

## Description

### TECHNICAL FIELD OF THE INVENTION

The present invention belongs to the field of aircraft and, in particular, relates to an electric power generation system for an aircraft. The present invention also relates to an electric power network comprising said electric power generation system, and to an aircraft comprising the electric power generation system.

### BACKGROUND OF THE INVENTION

Commercial transport jet aircraft typically include two or more primary turbine engines, which are used for the propulsion of the aircraft and also to power various electrical and hydraulic loads on the aircraft.

These aircraft also typically include at least one auxiliary power unit (APU), which is often mounted at the rear of the fuselage to generate auxiliary power in addition to or in lieu of the power provided by the primary engines of the aircraft. Accordingly, APUs can be used to provide power to an aircraft when the primary engines are not operational. This may occur, for instance, while the aircraft is awaiting departure at an airport gate. Furthermore, the APUs can also provide temporary power to start the primary engines during normal operations, and/or temporary emergency power during an engine-out condition or other emergency situations.

Furthermore, these commercial transport jet aircraft typically also include a Ram Air Turbine (commonly known by the acronym "RAT"), to generate emergency power in addition to or in lieu of the power provided by the primary engines of the aircraft. A RAT is usually connected directly to a dedicated electrical generator, to be used as an electrical power source. Other RAT arrangements are connected indirectly via a hydraulic pump to a dedicated electrical generator, such that the hydraulic pump produces hydraulic power, which is subsequently used to power the electrical generator. A dedicated converter AC/AC is typically connected to the output of the electrical generator of the RAT unit. The function of this dedicated AC/AC converter is to convert an alternating current (AC) input signal coming from the electrical generator output of the RAT unit to an alternating current (AC) output signal, where the output voltage and frequency can be arbitrarily varied and regulated.

The RAT is a small windmill-type propeller that, under normal conditions of a flight in an aircraft, is installed stowed in a compartment in the fuselage or wing. When required, the RAT is deployed manually or automatically outside the aircraft to drive either an electric generator, a hydraulic pump, or both installed in the aircraft. During the time between power loss and RAT deployment, aircraft batteries are generally used to power essential instrumentation. The RAT generates power from the airstream by ram pressure due to the speed of the aircraft.

In general, modern aircraft only employ a RAT unit in emergency situations, either in the event of a loss of hydraulic systems or following the loss of primary and auxiliary power sources. In the event of a simultaneous failure of both primary and auxiliary power sources, the RAT unit will provide power to vital systems of the aircraft, including flight controls or flight-critical instrumentation, navigation and communication equipment.

The provision of a RAT unit is becoming increasingly popular as a vital power emergency source in modern aircraft, as it can provide crucial power support in the event of an emergency, thereby ensuring the safe operation of the aircraft. Nevertheless, it is not without its shortcomings. One disadvantage of a RAT is its complex integration within the aircraft. This is due to the difficult selection of the location of the RAT, which is conditioned by strict aerodynamic requirements.

A further disadvantage of a RAT is that it is unable to provide sufficient power to power all the hydraulic and/or electric loads on an aircraft. If a RAT unit is configured to power an excessive number of loads during an emergency, the emergency power system may become overloaded, which may result in the RAT stalling. This can lead to a reduction or even the complete elimination of power to all loads, including those that are most essential for the safe operation of the aircraft during the emergency.

Furthermore, the provision of a RAT unit is accompanied by the disadvantage of a hidden failure risk. In other words, due to the fact that the RAT unit does not work on a nominal flight, any failure in a RAT component (e.g., corrosion of a part, wiring degradation, or component wear) could potentially result in an inoperative RAT unit, which would constitute a hidden failure. It is only in an emergency scenario that a hidden fault will be identified when the RAT is required. As a preventative measure, periodic maintenance checks are typically conducted on today's aircraft to verify that the RAT is functioning correctly. However, these checks on the RAT's components to ensure reliability are often time-consuming and labour-intensive.

Therefore, there is a need for a solution capable of generating and supplying power to the vital aircraft systems in different situations such as in the event of an emergency, with a high degree of reliability.

### SUMMARY OF THE INVENTION

The present invention provides a solution for the aforementioned problems by an electric power generation system for an aircraft according to claim 1, an electric power network according to claim 7 and an aircraft according to claim 13. In dependent claims, embodiments of the invention are defined.

In a first inventive aspect, the invention provides an electric power generation system for an aircraft, the electric power generation system comprising:
- at least two Ram Air Turbine (RAT) units, wherein each RAT unit has a respective electrical output;
- at least one AC/AC converter;
- at least two generators, wherein each generator is adapted to be connected to a respective engine, wherein each generator has a respective electrical output;
- one respective switching means for each AC/AC converter, each switching means being configured for selectively connecting either the electrical output of one generator or the electrical output of at least one RAT unit to the input of the respective AC/AC converter;
- a control unit configured for commanding the at least one switching means such that, in a situation when all of the engines fail, the control unit commands the at least one switching means to connect the output of at least one RAT unit to the input of the respective AC/AC converter.

In the context of the invention, the term "RAT unit" refers to a Ram Air Turbine in combination with at least a dedicated electrical generator. The RAT can be connected directly to the dedicated electrical generator or indirectly via a hydraulic pump that is connected to the RAT. In the latter case, the hydraulic pump is used to produce hydraulic power, which is subsequently used to power the dedicated electrical generator. The RAT unit is therefore used as an emergency hydraulic and/or electrical power source.

The electric power generation system of the present invention comprises at least two Ram Air Turbine (RAT) units, wherein each RAT unit has a respective electrical output. In an embodiment, the electric power generation system comprises two RAT units. In other embodiments, more than two RAT units, for example three RAT units, are provided in the electric power generation system.

The electric power generation system of the present invention further comprises at least two generators, wherein each generator is adapted to be connected to a respective engine, wherein each generator has a respective electrical output. Each generator is used to produce electricity, in combination with its respective engine. For example, in an embodiment, each generator outputs a 115-120V/400HZ AC. Preferably, the electric power generation system comprises two generators. In other embodiments, more than two generators are provided.

The electric power generation system for an aircraft is suitable for an electric architecture of the aircraft having multiple independent electrical power distribution networks to ensure safety and redundancy. In particular, the electric power generation system for an aircraft is suitable for an electric architecture of the aircraft that includes at least a primary electrical power distribution network and an emergency electrical power distribution network. The electric architecture may optionally include an auxiliary electrical power distribution network.

In the context of the invention, the term "generator of the electric power generation system refers to either a generator that is the same generator that is used in the primary electric power distribution network of the aircraft, or alternatively a dedicated generator of the aircraft that is specifically used in the emergency electric power distribution network of the aircraft that is being connected with the electric power generation system. In both cases, the generator may be of any known technology that produces an alternating current (AC) output. The generator is connected to an engine that is the main source of mechanical energy that drives the generator.

In an embodiment, the aircraft for which the electric power generation system is provided has at least a primary electrical power distribution network (i.e. the main engine-driven generator) and an emergency electric power distribution network; and at least one of the at least two generators of the electric power generation system is a dedicated generator of the aircraft that is specifically used to power the emergency electric power distribution network. In another embodiment, the at least two generators of the electric power generation system correspond to at least two dedicated generators of the aircraft that are specifically used to power the emergency electric power distribution network of the aircraft. Therefore, in this another embodiment, the primary electrical power distribution network of the aircraft is powered by its corresponding and independent generator driven by the corresponding engine. In this another embodiment, the electrical power architecture of the aircraft is robust and safe due to the presence of a redundant generator configuration.

In an alternative embodiment, the aircraft for which the electric power generation system is provided has at least a primary electrical power distribution network (i.e. the main engine-driven generator) and an emergency electric power distribution network; and at least one of the at least two generators of the electric power generation system is a common generator that is used to power both networks: the primary electric power distribution network and the emergency electric power distribution network. In another embodiment, the at least two generators of the electric power generation system correspond to at least two same generators that are used to power both the primary electric power distribution network of the aircraft and the emergency electric power distribution network. Therefore, in this another embodiment, the primary electrical power distribution network and the emergency electric power distribution network of the aircraft are powered by common generators for both networks.

In the context of the invention, the engine refers to the main propulsive engine of the aircraft, which is also known as the primary engine of the aircraft, which may be of any known technology. For example, the main engine of the aircraft may be a primary turbine engine.

The electric power generation system further comprises at least one AC/AC converter. The function of the at least one AC/AC converter is to modify the voltage of the AC current in its output with respect to its inlet.

The electric power generation system further comprises one respective switching means for each AC/AC converter. Each switching means is configured for selectively connecting either the electrical output of one generator or the electrical output of at least one RAT unit to the input of the respective AC/AC converter.

The electrical outputs of the at least two generators and the electrical outputs of the at least two RAT units are connected to the at least one AC/AC converter via the at least one switching means. It thus follows that, the at least one AC/AC converter has the function of changing either the voltage of the AC current coming from at least one RAT unit or the one from at least one generator.

The electric power generation system further comprises a control unit in communication with the at least one switching means and with the at least two engines. The control unit is configured for commanding the at least one switching means such that, in a situation when all of the engines fail, the control unit commands the at least one switching means to connect the output of at least one RAT unit to the input of the respective AC/AC converter.

In this emergency situation during a flight, when all of the engines fail, the control unit commands the at least one switching means to connect the output of the at least one RAT unit to the respective input of the at least one AC/AC converter. Consequently, the at least two generators are not connected to the corresponding AC/AC converters, at least one RAT unit is connected to the at least AC/AC converter and said RAT unit is deployed outside the aircraft and is used to power the aircraft, thereby producing electricity for the aircraft's various components. Consequently, in this emergency situation, the system according to the present invention produces electricity for the aircraft's various components exclusively from the power of at least one of the at least two RAT units, without the assistance of any engine.

The electrical power generation system of the present invention permits the generation of electrical power (i.e. electricity) on board an aircraft with different power sources (either by one or more generators with its corresponding engines or by at least one RAT unit) in such a manner that ensures a highly reliable supply of power to the aircraft's vital systems in the event of an emergency situation.

The electric power generation system of the present invention comprises at least two RAT units; and in an emergency situation when all of the engines fail, the control unit commands the at least one switching means to connect the output of at least one RAT unit to the respective input of the at least one AC/AC converter. Consequently, the control unit of the electric power generation system can connect one of the at least two RAT units, the other of the at least two RAT units or more than one of the at least two RAT units to the at least one AC/AC converter, depending on the circumstances of the flight and the operational status of the RAT units. This redundancy renders the electric power generation system more reliable than a conventional system with a single RAT unit.

On the other hand, the electrical power generation system of the present invention includes a common AC/AC converter for at least one RAT unit and for one generator, thereby reducing the number of components in the aircraft and therefore manufacturing and assembly costs.

In contrast, in a conventional electrical power generation system, at least two generators and only one RAT unit are typically provided. In the conventional case, an AC/AC converter is required for the RAT unit and also at least another different AC/AC converter is needed for the at least two generators. In some cases, each generator utilises a respective AC/AC converter. In other cases, more than one generator can utilise the same AC/AC converter.

In contrast to the conventional approach, the electrical power generation system of the present invention comprises at least two RAT units, which do not require a separate AC/AC converter at the output of their respective RAT electrical generators. Conversely, the output of a RAT electrical generator is connectable via the switching means to an AC/AC converter, which is in turn connectable via the switching means to the output of a generator. Consequently, only at least one AC/AC converter is required, rather than three independent AC/AC converters (one for each RAT unit and at least one for the at least two generators).

The provision of at least two RAT units in the electric power generation system, instead of a single RAT unit, permits a reduction in the size and weight of each individual RAT unit, in comparison to a conventional single RAT unit. Consequently, each of the at least two RAT units can be more easily housed in their non-deployed state within the aircraft, for example in different smaller integration spaces within the aircraft. Each RAT unit may be arranged in the same or different locations within the aircraft in their non-deployed state. This affords greater flexibility in the design and installation of the two or more RAT units within the aircraft, for instance in the triangular area at the front of the aircraft.

In addition, each of the RAT units of the at least two RAT units employs a same AC/AC converter that is used by at least one emergency electric generator. This optimises the conversion equipment and avoids the use of duplicative conversion equipment. Furthermore, the electric power generation system allows for easier parallelisation of the source.

Furthermore, the electric power generation system of the present invention has the additional advantage that any of the at least two RATs can be deployed outside the aircraft for other purposes, such as airbraking during landing. Furthermore, once one or more of the RATs have been deployed for this additional airbraking function, the energy generated in such an operation could be stored, for example in a battery, for later use.

In an embodiment, each generator is connected via one respective switching means to one respective AC/AC converter, establishing a one-to-one relationship between the generators and the AC/AC converters. In other embodiments, more than one of the at least two generators are connected via the same switching means to a single AC/AC converter.

Similarly, in an embodiment, each RAT unit is connected via one respective switching means to one respective AC/AC converter, establishing a one-to-one relationship between the RAT units and the AC/AC converters. In other embodiments, more than one of the at least two RAT units are connected via the same switching means to a single AC/AC converter.

To illustrate, in a scenario where one generator and two RAT units are connected via a switching means to a single AC/AC converter having one inlet. In this case, the switching means is configured for selectively connecting the input of the respective AC/AC converter either to: (i) the electrical output of the generator, (ii) the electrical output of one RAT unit, or (iii) the electrical outputs of both RAT units. Therefore, in this case, the switching means is configured to connect one or more than one connections to the inlet of the AC/AC converter.

In an embodiment, the control unit is also in communication with the at least two RAT units, in addition to the at least one switching means and the two engines. As a result, the control unit can receive an input from the at least two RAT units in the event that one of them is not operational.

In an embodiment, in the event that one or more of the at least two RAT units becomes inoperative and one or more of the at least two RAT units is operational, the control unit is further configured to command the switching means to connect the respective outputs of the RAT units that are operational to the input of the respective AC/AC converters and not to connect the respective outputs of the RAT units that are inoperative. In the event of the failure of one RAT unit, the remaining operational RAT unit or units can continue to function even when subjected to an overload.

In a preferred embodiment, the control unit is configured for commanding the at least one switching means such that, in a situation when all of the engines fail, the control unit commands the at least one switching means to connect each output of at least two RAT units to the input of the respective AC/AC converter.

In an embodiment, the at least two RAT units are two RAT units and the control unit is configured for commanding the at least one switching means such that, in a situation when all of the engines fail, the control unit commands the at least one switching means to connect each output of said two RAT units to the input of the respective AC/AC converter.

In another embodiment, the at least two RAT units are three or more RAT units and the control unit is configured for commanding the at least one switching means such that, in a situation when all of the engines fail, the control unit commands the at least one switching means to connect each output of at least two of the three or more RAT units to the input of the respective AC/AC converter. In an embodiment, the control unit is configured for commanding the at least one switching means such that, in a situation when all of the engines fail, the control unit commands the at least one switching means to connect each output of all the RAT units to the input of the respective AC/AC converter.

In the particular configuration where the control unit is further configured for commanding the at least one switching means to connect each output of at least two RAT units to the input of the respective AC/AC converter, in a situation when all of the engines fail, the provision of at least two RAT units powering at the same time the emergency network of the aircraft has the advantage of reducing the probability that all RAT units may have a simultaneous error. In other words, should one of the at least two RAT units malfunction or reduce its power output, for instance due to changes in the aircraft's orientation, at least another RAT unit is available and can be used to power the aircraft in this emergency situation. Consequently, the electric power generation system of the present invention is redundant and thus more reliable than a conventional electric power generation system having a single RAT unit.

Moreover, the provision of at least two RAT units that can power at the same time the emergency network of the aircraft, instead of a single RAT unit, confers the additional benefit of enabling the powering of a greater number of hydraulic and/or electric loads during an emergency on an aircraft. This ensures, or at the very least reduces the likelihood of, the electric power generation system becoming overloaded, thus preventing stalling in the at least two RAT units.

In an embodiment, the control unit is further configured for, when at least one of the engines is operational, commanding the at least one switching means to connect the outputs of the generators being connected to an engine being operational to the input of the respective AC/AC converter.

According to this embodiment, the electric power generation system of the present invention is designed in such a way that, in the event that at least one of the engines, respectively connected to each of the generators, is operational, the control unit commands the switching means so as to connect the respective output of the generator which is connected to the at least one of the engines being operational to the respective input of each AC/AC converter. In this first situation, none of the at least two RAT units are connected to the at least one AC/AC converter. Consequently, the electric power network is powered in this situation by the at least one generator that is operational. Therefore, in this situation, which can be typically a non-emergency situation, the system produces electricity for the aircraft's various components exclusively through the engine being operational and without the power of any RAT unit.

In a particular embodiment, the electric power generation system comprises one respective AC/AC converter for each RAT unit, thereby establishing a one-to-one relationship between each AC/AC converter and each RAT unit. To illustrate, in a particular embodiment, the electric power generation system may comprise two AC/AC converters and two RAT units, wherein each RAT unit is connected in a one-to-one relationship to one AC/AC converter via a respective switching means. In another particular embodiment, the electric power generation system may comprise three AC/AC converters, three RAT units, and three switching means, wherein each RAT unit is connected in a one-to-one relationship to one AC/AC converter via a respective switching means.

In other embodiments, the electric power generation system comprises one AC/AC converter for two or more RAT units. To illustrate, in a particular embodiment, the electric power generation system may comprise a single AC/AC converter and two RAT units, with a connection via a switching means between the AC/AC converter and the two RAT units. In another embodiment, the electric power generation system may comprise two different AC/AC converters and three RAT units, arranged as follows: two of the RAT units are independently connected to the same first AC/AC converter, while the third RAT unit is connected to the second AC/AC converter.

In a particular embodiment, the electric power generation system comprises one respective AC/AC converter for each generator, thereby establishing a one-to-one relationship between each AC/AC converter and each generator.

To illustrate, for instance, the electric power generation system may comprise two AC/AC converters and two generators being connected one to one via a respective switching means. In another embodiment, the electric power generation system may comprise three AC/AC converters and three generators, so that each respective generator is connected via one respective switching means to one respective AC/AC converter in a one-to-one relationship.

In other embodiments, the electric power generation system comprises one AC/AC converter for two or more generators. To illustrate, in a particular embodiment, the electric power generation system may comprise a single AC/AC converter and two generators, with a connection via a switching means between the single AC/AC converter and the two generators. In another embodiment, the electric power generation system may comprise two different AC/AC converters and three generators, arranged as follows: two of the generators are independently connected to the same first AC/AC converter, while the third generator is connected to the second AC/AC converter.

In an embodiment, at least one of the at least two RAT units comprises a RAT and a RAT generator directly connected to the RAT. In other embodiments, at least one of the at least two RAT units comprises a RAT generator indirectly connected to a RAT via a hydraulic pump connected to the RAT. In the latter case, the hydraulic pump is used to produce hydraulic power, which is subsequently used to power an electrical generator.

In an embodiment, the RAT generator is of the Variable Frequency Generator type, preferably of the Permanent Magnet Generator type. A Variable Frequency Generator represents a lighter solution than other types of RAT generators. Furthermore, the Variable Frequency Generator does not require to have an additional speed adaptation step, which is a benefit over other alternative types, such as an IDG (Integrated Drive Generator) that requires a speed adaptation step, which can be hydraulic. The use of a Variable Frequency Generator as a RAT generator therefore provides an efficient solution in terms of both a low weight and a single component.

In a second inventive aspect, the invention provides an electric power network for an aircraft, the electric power network comprising:
- the electric power generation system according to any of the embodiments of the first inventive aspect; and
- an emergency electric power distribution network connected with the electric power generation system, wherein the emergency electric power distribution network comprises one respective AC emergency power busbar for each AC/AC converter, wherein each AC emergency power busbar is configured for connecting a respective output of an AC/AC converter to at least one respective AC electrical load.

In an embodiment, the aircraft for which the electric power network is provided has, in addition to the emergency electric power distribution network, at least a primary electrical power distribution network (i.e. the main engine-driven generator); and at least one of the at least two generators of the electric power generation system is a dedicated generator of the aircraft that is specifically used to power the emergency electric power distribution network. In another embodiment, the at least two generators of the electric power generation system correspond to at least two dedicated generators of the aircraft that are specifically used to power the emergency electric power distribution network of the aircraft. Therefore, in this another embodiment, the primary electrical power distribution network of the aircraft is powered by its corresponding and independent generator driven by the corresponding engine. In this another embodiment, the electrical power architecture of the aircraft is robust and safe due to the presence of a redundant generator configuration.

In an alternative embodiment, the aircraft for which the electric power network is provided has, in addition to the emergency electric power distribution network, at least a primary electrical power distribution network (i.e. the main engine-driven generator); and at least one of the at least two generators of the electric power generation system is a common generator that is used to power both networks: the primary electric power distribution network and the emergency electric power distribution network. In another embodiment, the at least two generators of the electric power generation system correspond to at least two same generators that are used to power both the primary electric power distribution network of the aircraft and the emergency electric power distribution network. Therefore, in this another embodiment, the primary electrical power distribution network and the emergency electric power distribution network of the aircraft are powered by common generators for both networks.

Each AC emergency power busbar is used as a terminal in the emergency electric power distribution network to provide an organised way of distributing the AC power available from each AC/AC converter to the various systems and equipment that will consume it throughout the aircraft. The provision of busbars simplifies the wiring task and provides a common point from which the AC power can be distributed throughout the system. Therefore, individual components of the aircraft can be powered from the at least one busbar with circuit protection in the form of a circuit breaker or fuse incorporated into the wiring.

To illustrate, in an embodiment, if those cases where the electric power generation system comprises a single AC/AC converter, the electric power network comprises a single busbar. In another case where two AC/AC converters are provided in the electric power generation system, the electric power network comprises two different busbars.

In an embodiment of the second inventive aspect, the electric power generation system comprises at least two AC/AC converters, and the electric power network further comprises second switching means configured to selectively connect and disconnect one AC emergency power busbar to at least another AC emergency power busbar. In this embodiment, the control unit is further configured for, in a flight condition, commanding the second switching means to connect one AC emergency power busbar to at least another AC emergency power busbar for balancing the power between said at least two AC emergency power busbars based on the power delivered by each of the at least two RAT units.

According to this embodiment, the control unit is in communication with the second switching means and with the at least two RAT units.

According to this embodiment, the power at the AC busbar level between the various power lines that is output from each of the two or more AC/AC converters can be balanced.

For instance, in the event of a flight situation where all engines fail and one of the at least two RAT units is operating at its maximum capacity but the other RAT unit or units is/are faulty, or if one RAT provides less power than the other or others, the electric power network of the invention would compensate for the imbalance. This situation may occur, for example, due to the attitude or inclination of the aircraft, with one RAT being more exposed to the airflow.

In a possible embodiment, where the electric power generation system comprises two RAT units and each RAT unit is connected to a respective AC/AC converter, and in a first flight situation where the two RAT units are operating in a normal way, each busbar will power a power line without balance power between lines. However, in a second flight situation, where one of the two RAT units fails or one RAT unit provides a lower power output than the other RAT (for example, due to the aircraft altitude, and/or if one RAT unit is more exposed to the air flux than the other RAT unit), then the control unit of the electric power network will balance power between the two power lines at the AC emergency power busbars level.

In some embodiments, the control unit can be in communication with the various elements of the electric power generation system or the electric power network via a wireless connection. In other embodiments, the control unit is in wired communication with the various elements of the electric power generation system or the electric power network.

In an embodiment, the electric power network comprises:
- one respective AC/DC converter for each AC emergency power busbar, wherein each AC/DC converter is arranged at the output of a respective AC emergency power busbar;
- at least one respective DC emergency power busbar arranged at the output of each respective AC/DC converter, wherein the at least one respective DC emergency power busbar is adapted to connect at least one DC electrical load.

Preferably, the AC/DC converters of the previous embodiment are transformer rectifier units.

In a particular embodiment of the previous embodiment that comprises one respective AC/DC converter for each AC emergency power busbar and also at least one respective DC emergency power busbar arranged at the output of each respective AC/DC converter, the electric power generation system comprises at least two AC/AC converters, the electric power network comprises:
- third switching means configured to selectively connect and disconnect one DC emergency power busbar to at least another DC emergency power busbar, and,
- control means configured for, in a flight condition, commanding the third switching means to connect one DC emergency power busbar to at least another DC emergency power busbar for balancing the power between said at least two DC emergency power busbars based on the power delivered by each of the at least two RAT units.

In an embodiment, the control means are the control unit of the electric power generation system, wherein the control unit is configured for this purpose. In another embodiment, the control means are a second control unit configured for this purpose.

In an embodiment, the emergency electric power distribution network further comprises one respective DC/DC converter and one respective storage means for each DC emergency power busbar. In this embodiment, each respective DC/DC converter is arranged between the output of a respective DC emergency power busbar and the input of a respective storage means. For instance, the respective DC/DC converter may be embodied as a transformer rectifier unit.

Thus, the emergency electric power distribution network permits the charging of each of the storage means, for example one or more battery(s). Batteries can be used for both aircraft startup and as an emergency source of power in the event of a generation or distribution system failure.

In a third inventive aspect, the invention provides an aircraft comprising the electric power generation system according to any embodiment of the first inventive aspect or the electric power network according to any embodiment of the second inventive aspect; wherein the at least two RAT units of the electric power generation system are arranged such that in a retracted position they are housed within the aircraft and in a deployed position they are located outside the aircraft.

In an embodiment of the aircraft according to the third inventive aspect, the aircraft further comprises a respective engine connected to a respective generator.

In an embodiment of the aircraft, the electric power generation system or the electric power network is housed within the aircraft fuselage section and/or the aircraft wing section.

In an embodiment of the aircraft, the at least one AC/AC converter is housed within the avionic bay. In an embodiment, the at least two generators are housed on one RAT of the at least two RAT units or in the engine area.

All the features described in this specification (including the claims, description and drawings) can be combined in any combination, with the exception of combinations of such mutually exclusive features.

### DESCRIPTION OF THE DRAWINGS

These and other characteristics and advantages of the invention will become clearly understood in view of the detailed description of the invention which becomes apparent from preferred embodiments of the invention, given just as examples and not being limited thereto, with reference to the drawings.
- Figure 1: This figure shows a schematic representation of an electric power generation system for an aircraft according to an embodiment of the invention.
- Figure 2: This figure shows a schematic representation of an electric power generation system for an aircraft according to a second embodiment of the invention.
- Figure 3: This figure shows a schematic representation of an electric power generation system for an aircraft according to a third embodiment of the invention.
- Figure 4: This figure shows a schematic representation of an electric power network for an aircraft according to an embodiment of the invention.
- Figure 5: This figure shows a schematic representation of an aircraft comprising an electric power generation system according to an embodiment of the invention.

### DETAILED DESCRIPTION OF THE INVENTION

Once the object of the invention has been outlined, specific non-limitative embodiments are described hereinafter.

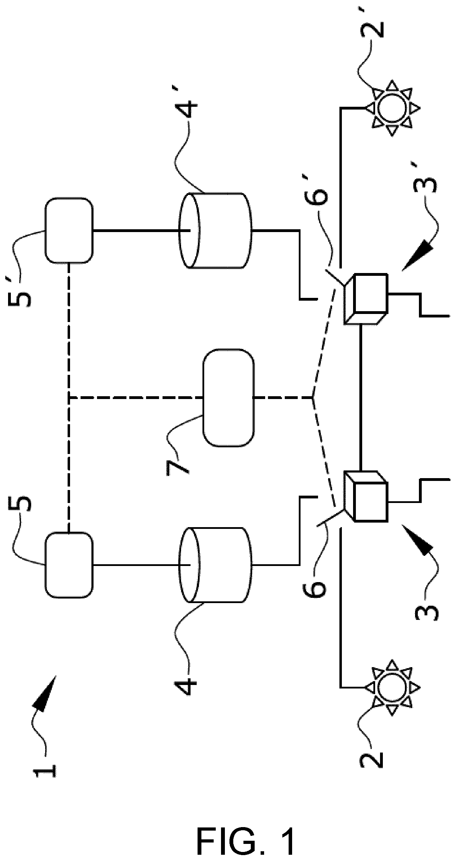

Figures 1, 2 and 3 each show a schematic representation of an electric power generation system (1) for an aircraft (100) according to different embodiments of the present invention.

The electric power generation system (1) for an aircraft (100) comprises:
- at least two Ram Air Turbine (RAT) units (2, 2');
- at least one AC/AC converter (3);
- at least two generators (4, 4'), adapted to be connected each to a respective engine (5, 5');
- one respective switching means (6) for each AC/AC converter (3); and
- a control unit (7).

In the particular embodiment shown in figure 1, the electric power generation system (1) for an aircraft comprises two RAT units (2, 2'), two AC/AC converters (3, 3'), two generators (4, 4'), two switching means (6, 6'), and a control unit (7). Each generator (4, 4') is adapted to be connected to a respective engine (5, 5').

For ease of explanation of the figures, the at least two RAT units (2, 2'), the at least one AC/AC converter (3, 3') and the at least two generators (4, 4') will henceforth be referred to as "first", "second" and "third". For example, in the embodiment shown in figure 1, the electric power generation system (1) comprises: a first and a second RAT units (2, 2'), a first and a second AC/AC converters (3, 3'), and a first and a second generators (4, 4').

Each one of the respective switching means (6, 6') is configured for selectively connecting either the electrical output of one generator (4, 4') or the electrical output of at least one RAT unit (2, 2') to the input of the respective AC/AC converter (3). In particular, the switching means (6) related to the first converter (3) are configured for selectively connecting either the electrical output of the first generator (4) or the electrical output of the first RAT unit (2) to the input of the first AC/AC converter (3); while the switching means (6') related to the second converter (3') is configured for selectively connecting either the electrical output of the second generator (4') or the electrical output of the second RAT unit (2') to the input of the second AC/AC converter (3').

The control unit (7) is in communication with both switching means (6, 6') and also in communication with the two engines (5, 5'). The communication between the control unit (7) and the various elements is represented in the figures by discontinuous lines. The control unit (7) is configured for commanding the at least one switching means (6, 6'), such that:
- in a situation when all of the engines (5, 5') fail, the control unit (7) commands the switching means (6, 6') to connect the output of at least one RAT unit (2, 2') to the input of the respective AC/AC converter (3, 3').

In the particular embodiment shown in figure 1, in the event of a failure of both engines (5, 5'), the control unit (7) commands the switching means (6) being in connection with the first AC/AC converter (3) to establish a connection between the output of the first RAT unit (2) and the input of the first AC/AC converter (3). Additionally, the control unit (7) commands the other switching means (6') being in connection with the second AC/AC converter (3') to establish a connection between the output of the second RAT unit (2') and the respective input of the second AC/AC converter (3'). Consequently, in this emergency situation when the two engines (5, 5') fail, the electric power generation system (1) generates power from both the first (2) and second (2') RAT units.

In the context of the invention, the term "input" of an AC/AC converter is used to refer in functional terms to the means of the AC/AC converter configured for receiving an input, such as a signal. The input of the AC/AC converter may be embodied as a single input port or as a plurality of input ports.

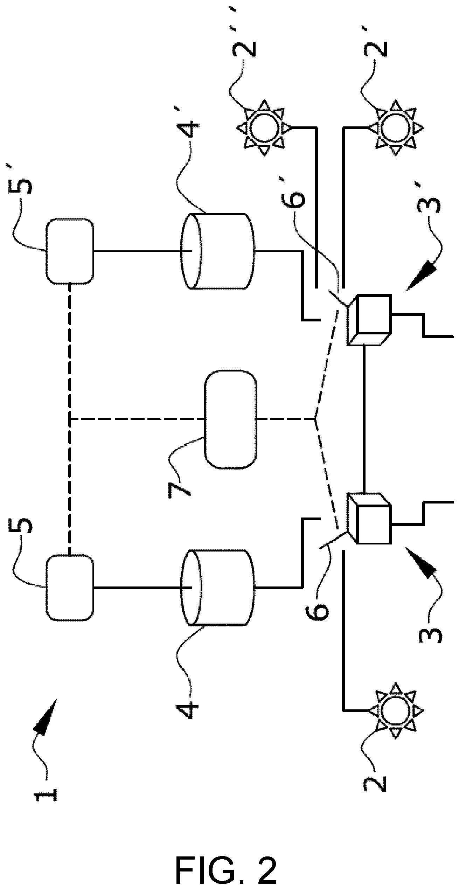

In the embodiment shown in figure 2, the electric power generation system (1) for an aircraft comprises three RAT units (2, 2', 2"), two AC/AC converters (3, 3'), two generators (4, 4'), two switching means (6, 6'), and a control unit (7). Each generator (4, 4') is adapted to be connected to a respective engine (5, 5').

For ease of explanation of figure 2, the three RAT units (2, 2', 2") will henceforth be referred to as "first", "second" and "third" RAT units. Similarly, the two AC/AC converters (3, 3') and the two generators (4, 4') will henceforth be referred to as "first" and "second".

In the particular embodiment shown in figure 2, the switching means (6) associated with the first converter (3) is configured for selectively connecting either the electrical output of the first generator (4) or the electrical output of the first RAT unit (2) to the input of the first AC/AC converter (3). Conversely, the switching means (6') associated with the second converter (3') is configured for selectively connecting one of the following three options to the input of the respective AC/AC second converter (3'): (i) the electrical output of the second generator (4'), or (ii) the electrical output of the second RAT unit (2'), or (iii) the electrical output of the third RAT unit (2"), or the electrical output of the second and third RAT units (2', 2").

In the embodiment of figure 2, the control unit (7) is in communication with both switching means (6, 6') and also with the two engines (5, 5'). The control unit (7) is configured for commanding the two switching means (6, 6'), such that, in a situation when the two engines (5, 5') fail, the control unit (7) commands the two switching means to connect the output of at least one RAT unit (2, 2') to the input of the AC/AC converter (3).

In the embodiment of figure 2, when the two engines (5, 5') fail, the control unit (7) commands the switching means (6) being associated with the first AC/AC converter (3) to connect the output of the first RAT unit (2) to the respective input of the first AC/AC converter (3). Additionally, the control unit (7) commands the other switching means (6') being associated with the second AC/AC converter (3') to connect the respective outputs of the second and the third RAT units (2', 2") to the respective input of the second AC/AC converter (3'). Consequently, in this situation, the electric power generation system (1) generates power from the first (2), the second (2') and the third (2") RAT units.

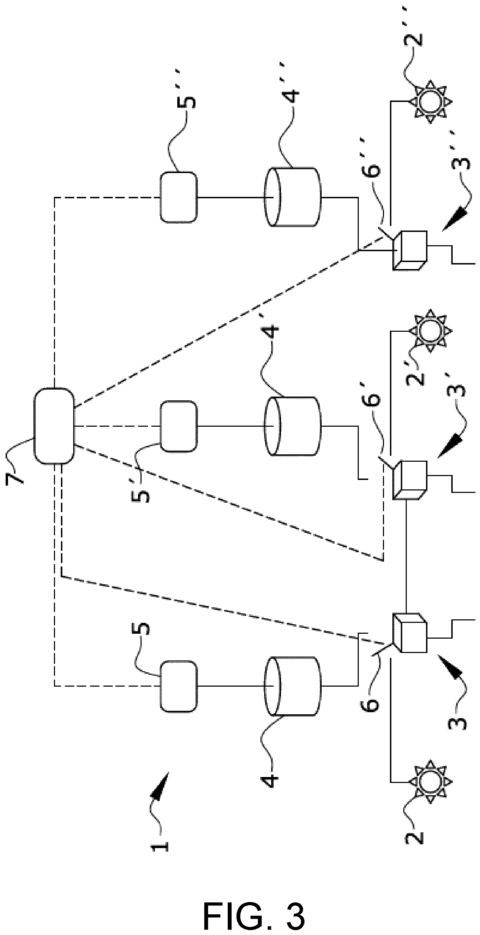

In the embodiment shown in figure 3, the electric power generation system (1) for an aircraft comprises three RAT units (2, 2', 2"), three AC/AC converters (3, 3', 3"), three generators (4, 4', 4"), three switching means (6, 6', 6") wherein one switching means (6, 6', 6") is associated with a respective AC/AC converter (3, 3', 3"), and a control unit (7). Each of the generators (4, 4', 4") is adapted to be connected to a respective engine (5, 5', 5").

For ease of explanation of figure 3, the three RAT units (2, 2', 2") will henceforth be referred to as "first", "second" and "third" RAT units. Similarly, the three AC/AC converters (3, 3', 3") and the three generators (4, 4', 4") will henceforth be referred to as "first", "second" and "third".

In the particular embodiment shown in figure 3, the switching means (6) associated with the first converter (3) is configured for selectively connecting one of the following two options to the input of the respective AC/AC second converter (3'): (i) the electrical output of the first generator (4), or (ii) the electrical output of the first RAT unit (2). The switching means (6') associated with the second converter (3') is configured for selectively connecting one of the following two options to the input of the respective AC/AC second converter (3'): (i) the electrical output of the second generator (4'), or (ii) the electrical output of the second RAT unit (2'). Finally, the switching means (6") associated with the third converter (3") is configured for selectively connecting one of the following two options to the input of the respective AC/AC third converter (3"): (i) the electrical output of the third generator (4"), or (ii) the electrical output of the third RAT unit (2").

In the embodiment of figure 3, the control unit (7) is in communication with all three switching means (6, 6', 6") and also with all three engines (5, 5', 5"). The control unit (7) is configured for commanding the three switching means (6, 6', 6"), such that, in a situation when the three engines (5, 5', 5") fail, the control unit (7) commands the three switching means (6, 6', 6") to connect the output of at least one RAT unit (2, 2', 2") to the input of the respective AC/AC converter (3).

In the embodiment of figure 3, when the two engines (5, 5') fail, the control unit (7) commands the switching means (6) being associated with the first AC/AC converter (3) to connect the output of the first RAT unit (2) to the respective input of the first AC/AC converter (3). Additionally, the control unit (7) commands the switching means (6') being associated with the second AC/AC converter (3') to connect the output of the second RAT unit (2') to the respective input of the second AC/AC converter (3'). And also, the control unit (7) commands the switching means (6') being associated with the third AC/AC converter (3") to connect the output of the third RAT unit (2") to the respective input of the third AC/AC converter (3"). Consequently, in this situation when all of the engines (5, 5', 5") fail, the electric power generation system (1) generates power from at least one of the first (2), the second (2') and the third (2") RAT unit. In other words, the electric power generation system (1) can generate power from the first (2), second (2') or third (2") RAT unit; or from two RAT units selected from the first (2), second (2') or third (2") RAT units; or from all three RAT units (2, 2', 2").

In an embodiment, the control unit (7) is further configured for, when at least one of the engines (5, 5', 5") is operational, commanding the at least one switching means (6, 6, 6") to connect the outputs of the generators (4, 4', 4") being connected to an engine (5, 5', 5") being operational to the input of the respective AC/AC converter (3, 3', 3").

In an embodiment, the electric power generation system (1), as the embodiment shown in figures 1 and 3, comprises one respective AC/AC converter (6, 6', 6") for each RAT unit (2, 2', 6").

In an embodiment, at least one of the at least two RAT units (2, 2', 2") is of the type that comprises a RAT and a RAT generator directly connected to the RAT. In the figures, each RAT unit (2, 2', 2") is represented by a symbol that depicts a RAT, and therefore the RAT generator is not depicted.

In an embodiment, the RAT generator is of the Variable Frequency Generator type, preferably of the Permanent Magnet Generator type.

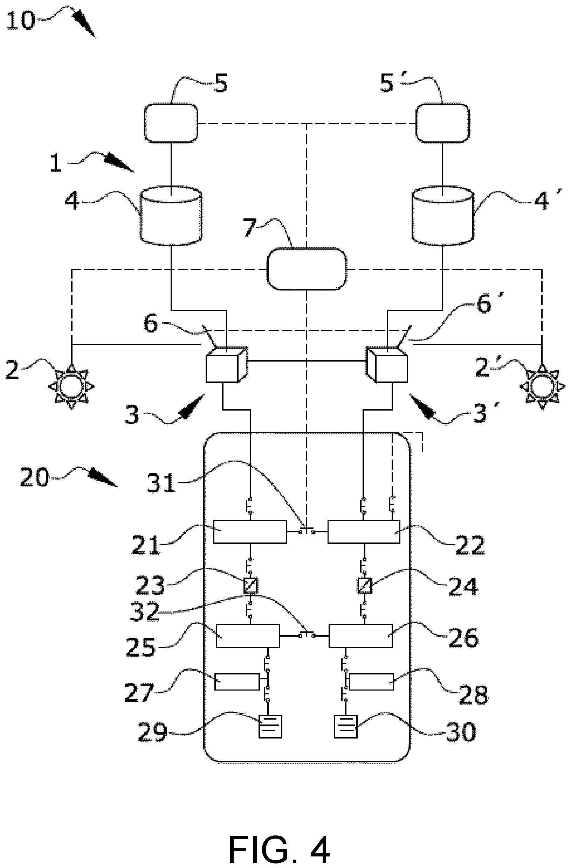

Figure 4 shows a schematic representation of an electric power network (10) for an aircraft (100) according to an embodiment of the second inventive aspect of the invention. The electric power network (10) comprises the electric power generation system (1) according to any of the embodiments of the first inventive aspect which is connected to an emergency electric power distribution network (20). The emergency electric power distribution network (20) comprises one respective AC emergency power busbar (21, 22) for each AC/AC converter (3, 3'), wherein each AC emergency power busbar (21, 22) is configured for connecting a respective output of an AC/AC converter (3, 3') to at least one respective AC electrical load.

In an embodiment of the electric power network (10), as illustrated in figure 4, the electric power generation system (1) is the one depicted in figure 1 and which has been previously explained which comprises two AC/AC converters (3, 3'). The electric power network (10) further comprises, in addition to one respective AC emergency power busbar (21, 22) for each AC/AC converter (3, 3'), second switching means (31) configured to selectively connect and disconnect one AC emergency power busbar (21) to the other AC emergency power busbar (22). In this embodiment, the control unit (7) is also in communication with the second switching means (31) and with the at least two RAT units (2, 2'), wherein the control unit (7) is further configured for, in a flight condition, commanding the second switching means (31) to connect one AC emergency power busbar (21) to the other AC emergency power busbar (22) for balancing the power between said at least two AC emergency power busbars (21, 22) based on the power delivered by each of the at least two RAT units (2, 2').

For example, in a situation during a flight, it is conceivable that one of the two RAT units, for instance the first RAT unit (2), may be operating at its maximum capacity, while the other RAT unit (2') may be providing less power than the first RAT unit (2). This reduced power in one of the RAT units may be attributed to the attitude or inclination of the aircraft, with this RAT being less exposed to the airflow. In this situation, the control unit (7) is configured to receive the power delivered by each of the at least two RAT units (2, 2') and command the second switching means (31) to establish a connection between one AC emergency power busbar (21) and the other AC emergency power busbar (22). This enables the balancing of the power between the at least two AC emergency power busbars (21, 22), thereby compensating for any existing imbalances.

In an embodiment, as illustrated in figure 4, the emergency electric power distribution network (20) further comprises:
- one respective AC/DC converter (23, 24) for each AC emergency power busbar (21, 22), wherein each AC/DC converter (23, 24) is arranged at the output of a respective AC emergency power busbar (21, 22);
- at least one respective DC emergency power busbar (25, 26) arranged at the output of each respective AC/DC converter (23, 24), wherein the at least one respective DC emergency power busbar (25, 26) is adapted to connect at least one DC electrical load.

In the embodiment shown in figure 4, two AC/DC converters (23, 24) and two DC emergency power busbars (25, 26) are provided.

In an embodiment, as illustrated in figure 4, the electric power generation system (1) comprises at least two AC/AC converters (3, 3'); and the electric power network (10) comprises:
- third switching means (32) configured to selectively connect and disconnect one DC emergency power busbar (25) to at least another DC emergency power busbar (26); and
- control means configured for, in a flight condition, commanding the third switching means (32) to connect one DC emergency power busbar (25) to at least another DC emergency power busbar (26) for balancing the power between said at least two DC emergency power busbars (25, 26) based on the power delivered by each of the at least two RAT units (2, 2').

In the embodiment shown in figure 4, the control means are a second control unit (not shown) configured for this purpose. For this reason, the third switching means (32) are not shown in figure 4 as connected to the control unit (3). Instead, the second switching means (31), which are in communication with the control unit (3), are represented in figure 4 connected to the control unit (3) by a dashed line.

The control unit (7) of the electric power generation system (1) in this embodiment is in communication, in addition to the at least one switching means (6) and the at least two engines (5, 5'), with the third switching means (32) and with the at least two RAT units (2, 2').

In an embodiment, as shown in figure 4, the emergency electric power distribution network (20) further comprises one respective storage means (29, 30) for each DC emergency power busbar (25, 26). The emergency electric power distribution network (20) further comprises one respective DC/DC converter (27, 28) for each DC emergency power busbar (25, 26), wherein each respective DC/DC converter (27, 28) is arranged between the output of a respective DC emergency power busbar (25, 26) and the input of a respective storage means (29, 30). In the embodiment shown in figure 4, two storage means (29, 30), i.e. one storage means (29, 30) for each DC emergency power busbar (25, 26), are provided.

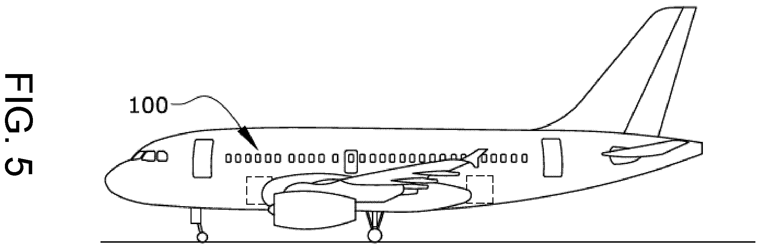

Figure 5 shows a schematic representation of an aircraft (100) according to an embodiment of the third inventive aspect of the invention, wherein the aircraft (100) comprises an electric power generation system (1) according to an embodiment of the first inventive aspect of the invention, or the electric power network (10) according to an embodiment of the second inventive aspect of the invention; and wherein the at least two RAT units (2, 2') of the electric power generation system (1) are arranged such that in a retracted position they are housed within the aircraft (100) and in a deployed position they are located outside the aircraft (100).

In an embodiment of the aircraft (100), the electric power generation system (1) or the electric power network (10) is housed within the aircraft fuselage section or the aircraft wing section.

## Claims

1. Electric power generation system (1) for an aircraft (100), the electric power generation system (1) comprising:
- at least two Ram Air Turbine (RAT) units (2, 2'), wherein each RAT unit (2, 2') has a respective electrical output;
- at least one AC/AC converter (3);
- at least two generators (4, 4'), wherein each generator (4, 4') is adapted to be connected to a respective engine (5, 5'), wherein each generator (4, 4') has a respective electrical output;
- one respective switching means (6) for each AC/AC converter (3), each switching means (6) being configured for selectively connecting either the electrical output of one generator (4, 4') or the electrical output of at least one RAT unit (2, 2') to the input of the respective AC/AC converter (3);
- a control unit (7) configured for commanding the at least one switching means (6) such that, in a situation when all of the engines (5, 5') fail, the control unit (7) commands the at least one switching means (6) to connect the output of at least one RAT unit (2, 2') to the input of the respective AC/AC converter (3).

2. The electric power generation system (1) according to claim 1, wherein the control unit (7) is further configured for commanding the at least one switching means (6) such that, in a situation when all of the engines (5, 5') fail, the control unit (7) commands the at least one switching means (6) to connect each output of at least two RAT units (2, 2') to the input of the respective AC/AC converter (3).

3. The electric power generation system (1) according to claim 1 or 2, wherein the control unit (7) is further configured for, when at least one of the engines (5, 5') is operational, commanding the at least one switching means (6) to connect the outputs of the emergency generators (4, 4') being connected to an engine (5, 5') being operational to the input of the respective AC/AC converter (3).

4. The electric power generation system (1) according to any one of the previous claims, comprising one respective AC/AC converter (3, 3') for each RAT unit (2, 2').

5. The electric power generation system (1) according to any one of the previous claims, wherein at least one of the at least two RAT units (2, 2') comprises a RAT and a RAT generator directly connected to the RAT.

6. The electric power generation system (1) according to the previous claim, wherein the RAT generator is of the Variable Frequency Generator type, preferably of the Permanent Magnet Generator type.

7. Electric power network (10) for an aircraft (100), the electric power network (10) comprising:
- the electric power generation system (1) according to any one of the previous claims; and
- an emergency electric power distribution network (20) connected with the electric power generation system (1), wherein the emergency electric power distribution network (20) comprises one respective AC emergency power busbar (21, 22) for each AC/AC converter (3, 3'), wherein each AC emergency power busbar (21, 22) is configured for connecting a respective output of an AC/AC converter (3, 3') to at least one respective AC electrical load.

8. The electric power network (10) according to claim 7, wherein:
- the electric power generation system (1) comprises at least two AC/AC converters (3, 3'), and
- the emergency electric power distribution network (20) comprises at least two respective AC emergency power busbars (21, 22), one AC emergency power busbar (21, 22) for each AC/AC converter (3, 3').

9. The electric power network (10) according to claim 8, wherein:
- the electric power network (10) further comprises second switching means (31) configured to selectively connect and disconnect one AC emergency power busbar (21) to at least another AC emergency power busbar (22); and
- the control unit (7) is further configured for, in a flight condition, commanding the second switching means (31) to connect one AC emergency power busbar (21) to at least another AC emergency power busbar (22) for balancing the power between said at least two AC emergency power busbars (21, 22) based on the power delivered by each of the at least two RAT units (2, 2').

10. The electric power network (10) according to any one of claims 7 to 9, wherein the emergency electric power distribution network (20) further comprises:
- one respective AC/DC converter (23, 24) for each AC emergency power busbar (21, 22), wherein each AC/DC converter (23, 24) is arranged at the output of a respective AC emergency power busbar (21, 22);
- at least one respective DC emergency power busbar (25, 26) arranged at the output of each respective AC/DC converter (23, 24), wherein the at least one respective DC emergency power busbar (25, 26) is adapted to connect at least one DC electrical load.

11. The electric power network (10) according to claim 8 and 10, wherein:
- the electric power network (10) comprises:
- third switching means (32) configured to selectively connect and disconnect one DC emergency power busbar (25) to at least another DC emergency power busbar (26); and
- control means configured for, in a flight condition, commanding the third switching means (32) to connect one DC emergency power busbar (25) to at least another DC emergency power busbar (26) for balancing the power between said at least two DC emergency power busbars (25, 26) based on the power delivered by each of the at least two RAT units (2, 2').

12. The electric power network (10) according to any of claims 10 or 11, wherein the emergency electric power distribution network (20) further comprises one respective DC/DC converter and one respective storage means (29, 30) for each DC emergency power busbar (25, 26), wherein each respective DC/DC converter is arranged between the output of a respective DC emergency power busbar and the input of a respective storage means (29, 30).

13. Aircraft (100) comprising the electric power generation system (1) according to any of claims 1 to 6 or the electric power network (10) according to any of claims 7 to 12; wherein the at least two RAT units (2, 2') of the electric power generation system (1) are arranged such that in a retracted position they are housed within the aircraft (100) and in a deployed position they are located outside the aircraft (100).

14. The aircraft (100) according to claim 13, wherein the electric power generation system (1) or the electric power network (10) is housed within the aircraft fuselage section or the aircraft wing section.
